# EUROPEAN PATENT SPECIFICATION

(11) **EP 0 626 932 B1**
(45) Date of publication and mention of the grant of the patent: **31.10.2001**
(21) Application number: 93902472.5
(22) Date of filing: 28.01.1993
(51) Int. Cl.: C02F 1/24

(54) **DISSOLVED AIR FLOTATION**
FLOTATIONSVERFAHREN
FLOTTATION PAR AIR DISSOUS

(30) Priority: 31.01.1992 GB 9202153
(43) Date of publication of application: 07.12.1994
(73) Proprietor: THAMES WATER UTILITIES LIMITED, Reading Berks. RG1 8DB (GB)
(72) Inventor: EADES, Andrew 75 Penyston Road, Berks SL6 6ED (GB); STEVENSON, David, Gordon Firstones Adbury Holt, Newbury Berks RG15 9BN (GB)
(74) Representative: Johnson, Terence Leslie
(86) International application number: GB9300176
(87) International publication number: WO9315021

(56) References cited:
- GB-A- 2 230 710
- Patent Abstracts of Japan, Vol 7, No 232, C-190, 1989-11-07 & JP,A, 58 124586 (SHIYUUICHI NAKAGAWA), 25 July 1983

## Description

The invention relates to dissolved air flotation, particularly such flotation as used as a primary treatment process in water treatment plants.

In such a process, water saturated with dissolved air is generally released into a stream of pre-flocculated raw water. On release, the air comes out of solution, nucleating into a stream of bubbles of a few microns in diameter. The bubbles attach to the floc, enhance its buoyancy, and cause it to float to the surface, whence it may be removed. The dissolved air is usually released into the raw water stream such that the main throughput carries the air into a residence tank. The floc then floats to the surface and is removed by a suitable system such as hydraulically or mechanically, using a scraper system. This system is however expensive in terms of capital expenditure and operating expenditure, as well as on space (land), in that a relatively large installation is required which in turn requires high power and mechanical costs. Examples of prior art treatment systems according to the preambles of Claims 1 and 11 can be found in GB-A-2230710; GB-A-1496191; GB-A-1531775; JP-A-58-124586; and GB-A-1194850.

GB-A-1 194 850 in particular describes a method and apparatus for removing particulate materials from a liquid, using a zone of bubbles. The liquid treatment vessel may be associated with a filter. GB-A-1 194 850 discloses various kinds of bubble distributors, including grid and electrodes. Liquid is passed into the treatment vessel via a pipe situated above the bubble generator. This document does not disclose the introduction of the liquid via a riser having a trumpet or bell end so that the energy of the liquid is dissipated in the manner of the present invention.

It is accordingly an object of the invention to seek to mitigate these disadvantages.

Using the invention, the released impurities can then be removed by some suitable means.

According to a first aspect of the invention there is provided a method of removing particulate impurities, comprising providing a treatment vessel, providing a liquid containing particulate impurities, providing a source of gas, providing a zone of gas bubbles in the liquid, passing substantially all incoming liquid through the bubble zone whereby bubbles adhere to particulate impurities in the liquid and cause flotation thereof, and providing a filter for the liquid, characterised by passing the liquid into the vessel above the zone of bubbles in an initial direction away from the filter via a riser having a trumpet or bell end so that the energy of the liquid is dissipated whereby integrity of the zone is maintained, by passing the liquid through the zone of bubbles in counter-current relation, and then passing the liquid to the filter in the vessel, downstream of the zone of bubbles, for filtration of the liquid.

Using the invention, it is possible to ensure that all incoming liquid passes through the zone of bubbles, to provide an optimum particle/particle contact and bubble/particle contact.

The source of bubbles may comprise the liquid supersaturated with the gas. This is an efficient use of the liquid, which can be recycled to provide the gas and to act as a carrier therefor.

The method may include the step of providing that the rising or floating particles flocculate during rising to the liquid surface. This provides for efficient separation of the impurities and carriage thereof to the surface, particularly where the particulate impurities may combine with each other and/or with sinking particulate material.

Preferably the gas bubble zone may extend substantially over the cross-sectional area of the vessel. This provides for full contact of the impurities with the bubbles, and efficient impurities' removal.

The gas bubble zone may be continuously maintained. Thus there is always a layer or blanket of bubbles operative to strip impurities from the liquid.

The step of regeneration of the filter means may be included in the method, particularly a backwashing step.

The method may include the step of de-scumming the liquid. This step may be carried out by raising the level of the liquid in the vessel. This is a relatively simple operation.

According to a second aspect of the invention there is provided apparatus for removing particulate materials from a liquid, comprising a treatment vessel, an inlet to the vessel for liquid containing impurities to be treated, and a source of bubbles of gas adapted to provide in use a zone of bubbles in the vessel through which zone incoming liquid passes in counter-current relation, characterised by the liquid inlet comprising a riser having a trumpet or bell end being disposed to pass the liquid into the vessel in an initial direction away from the filter and above the bubble zone so as not to disrupt the bubble zone, and by the filter being in the vessel, downstream in use of the zone of gas bubbles, the arrangement being such that liquid containing impurities passes through the zone of gas bubbles in said counter-current relation and then to the filter means.

The source of bubbles of gas may comprise a nozzle means through which is dispensed liquid supersaturated with gas. This provides for a uniform dispersion of the gas.

The nozzle means may be intermediate the inlet for liquid and the filter means.

The gas may be air. This is a relatively inexpensive source.

There may be means to maintain the zone of air continuously in the vessel. This provides for an efficient operation of the apparatus.

For efficient filtering, the filter means may comprise a bed of anthracite on sand, or alternatively sand.

There may be means to backwash the filter means. This provides for an efficient operation of the apparatus.

The nozzle means may comprise a ramified means having spaced apart nozzles, or alternatively a single nozzle means. Either embodiment provides a bubble zone across substantially the whole cross-sectional area of the vessel nozzle. The nozzle means may be adjustable in position. This provides for adjustability according to desired operating parameters.

There may be a curved side weir plate means at a side of the vessel opposite that from which sludge is removed. This provides for a horizontal hydraulic force on the scum to be removed, so facilitating removal thereof.

There may be a flocculator means upstream of the vessel. This enhances impurities' separation, particularly where the flocculator means may comprise a plurality of flocculation tanks through which the liquid flows in series.

The flocculator means, and vessel may be in a single unit. This provides for a compact structure which does not take up a great deal of space.

It will be understood that the apparatus may be incorporated in an existing flocculating filtering vessel.

In either case, the air from the nozzle means provides a blanket of fine air bubbles, suitably micro-bubbles through which incoming liquid to be treated must flow to provide a flotation stage in the zone before the treated liquid, from which the main impurities have been removed by flotation, passes before continuing on in the same direction, counter to the air flow, to the filter.

It will be understood that liquid to be treated includes sewage, raw river water in storage in say a reservoir, water containing algal blooms, and to "clean" and "dirty" water treatment processes.

The apparatus may be used in retrofits to not only rapid gravity and roughing filters, but also to what are known as Flat Bottom Clarifiers (FBC) or Sedimentation Tanks. In the latter the invention's air blanket would replace what was the function of a sludge blanket, performing the filter quicker and more efficiently. Moreover, the filter means may comprise a biological aerated filter (BAF).

A method and apparatus embodying the invention are hereinafter described, by way of example, with reference to the accompanying drawings.
Fig.1 is a plan view of apparatus for carrying out a method for removing particulate impurities from a liquid;
Fig.2 is a side elevation view thereof taken in the direction of arrow II in Fig.1;
Fig.3 is an end elevational view thereof;
Fig.4 is a schematic plan view of a modification of the part 'X' of the apparatus of Fig.1 illustrating apparatus according to the invention;
Fig.5 is a schematic flow diagram showing flow through the apparatus of Fig.4; and
Fig.6 is a graphical representation of the efficacy of method and apparatus according to the invention.

Referring to the drawings in which like parts are shown by like reference numerals, there is shown apparatus 1, for removing impurities from liquid stream such as water containing particulate impurities from a raw water feed comprising a source 2 of water, a source of gas 3, suitably dissolved air under pressure, and means to pass the gas into the water, in counter-flow relation thereto whereby to adhere bubbles of gas to the impurities and cause same to rise to the surface.

The apparatus 1 as shown comprises a unitary structure in which compartments 4, 5 and 6 of a single tank are separated by internal baffles so as to provide a serpentine path to enable a residence time sufficient to induce flocculation. 6 is hooded for ozone off-gas capture. The compartments have alternative inlets 7, 8 and outlets. The top of the compartments 4, 5, 6 is adjacent an elevated walkway 9 situated over a sludge collection tank which is in turn situated over a control room 10 in which a source comprising air is situated.

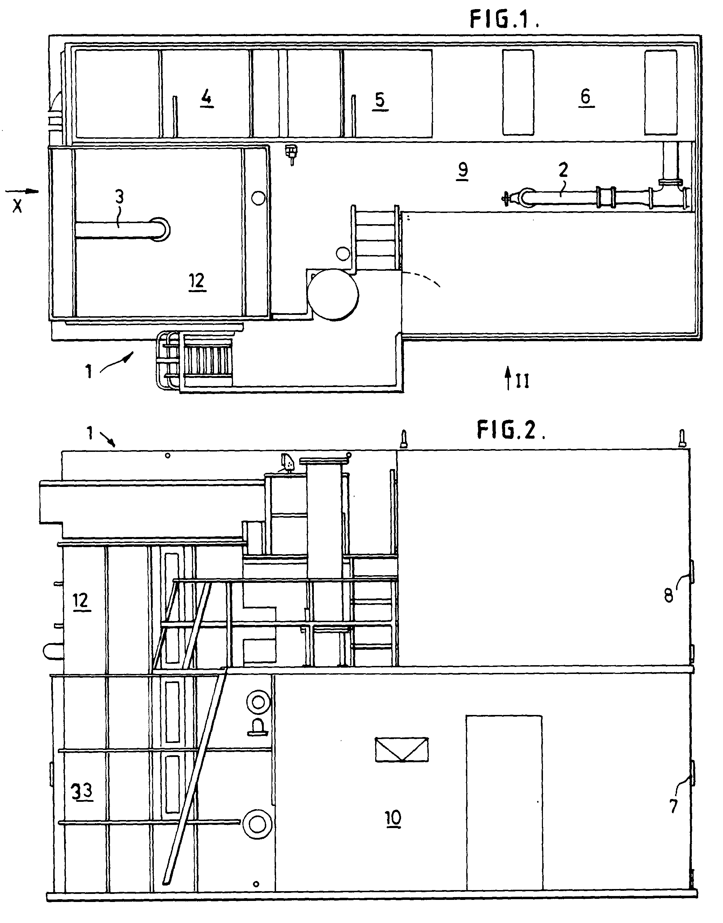

There is a flotation tank 12 situated above a filter bed 33, in the embodiment, of anthracite on sand, though it will be understood that any suitable material may be used for the filter, such as sand per se. In Fig.1, the inlet for water supersaturated with air is in the form of an inlet manifold leading to a ramified structure comprising a grid of, in the embodiment, upwardly directed nozzles arranged in a generally orthogonal array so as substantially to extend over the surface area of the tank. There are six nozzles, arranged in two banks of three, though there could be more or less as desired. The nozzles may be releasably secured as by screwing to the manifold so that they can be separated therefrom for ease of transport. Also, the dimensions of the grid can be adjusted by adding or removing one or more nozzles, or by 'clipping-off' an existing nozzle.

The raw water fed into the apparatus 1 is pre-treated by flocculation in the tank 4, 5, 6 before being fed to the flotation tank, where it passes in counter-current flow to the air bubbles. The nozzles are below an inlet to the tank or vessel 12 for pre-treated liquid, so that a zone of air micro-bubbles extends across substantially the whole of the surface area of the tank 12. The air bubbles are initially dissolved in the water, but come out of solution when they emerge from the nozzles to form the micro bubbles which effectively form a blanket of air across the whole tank, the air bubbles adhering to the impurities in the pre-treated water and raising them to the surface where it is discharged from the tank over a weir intermittently and in a controlled manner. The apparatus 1 is under automatic control using ultrasonics and based on data relating to on-line flow and turbidity, with protection against process failure and deterioration in water quality.

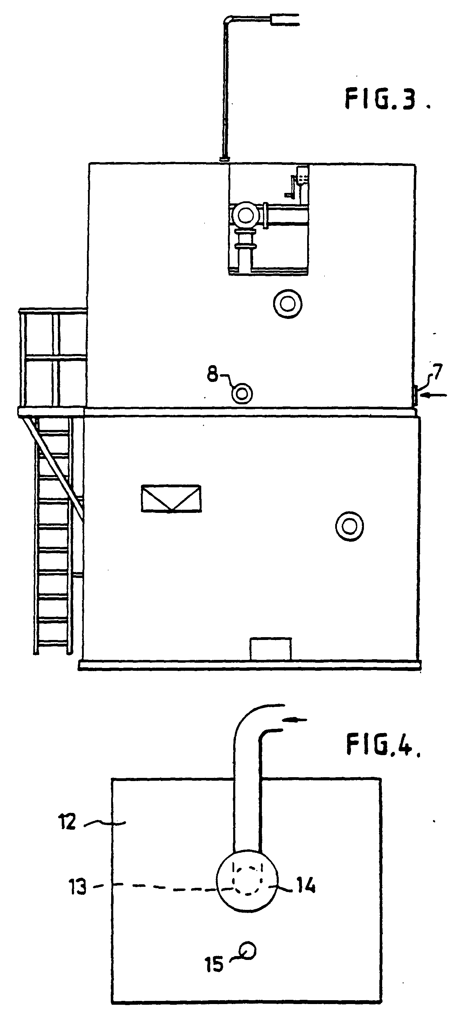

In the apparatus of Fig.4, according to the invention the tank 12 contains an upwardly directed inlet nozzle 13 with a trumpet or bell-end and a spaced covering 14, suitably conical, for directing the treated liquid into the tank. The riser diameter is such that the exit velocity of the flocculated water is small, an in-pipe velocity of <0,3m sec⁻¹ being preferred. This helps to avoid damage to the sludge blanket and disruption to the flotation zone by large, high energy, toroidal vortices. An inlet spacing of 1/4m² for the single inlet requires careful monitoring of the fluid flow velocities at the inlet and outlet of the inlet pipework. High inlet velocities require a large inlet cone (as herein referred to) to dissipate flow energy, which would otherwise lead to high exit velocities or shedded vortices which can damage the sludge blanket. A short inlet cone provides good flotation results, with a low inlet velocity (<0.35m sec⁻¹) leading to low exit velocities <0.04m sec⁻¹.

A single air diffusing nozzle 15, situated below the level of the lowest part of the inlet riser, is situated adjacent the riser. This simplified structure saves on pipework, and also distributes incoming liquid in such a way as to achieve quiescent flow conditions, so enhancing the formation of a stable air bubble zone.

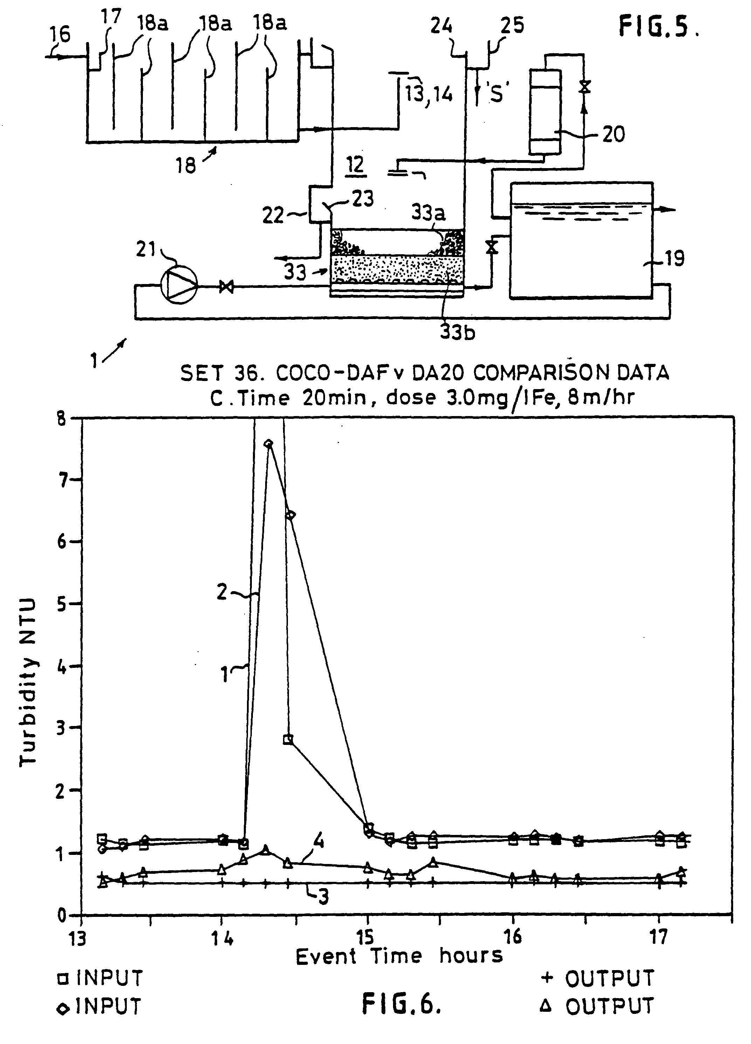

Referring to the schematic view of the apparatus 1 shown in Fig.5, influent or water to be treated 16 is flash mixed in a dosing weir 17 with a flocculating agent, such as ferric sulphate solution from a sparge pipe, and then passes from the weir 16 to a seven chamber hydraulic flocculator 18 (similar to the chambers 4, 5, 6) where floc is formed as the water follows a sinuous path under and over baffles 18a. The height of the weir 17 is adjustable. Also the weir may include projecting fingers, to break up the flow plane of the water to allow the flocculating agent to enter the water before a turbulent zone, so aiding mixing.

The flocculated water then passes via the nozzle 13 and cover 14 into the tank 12, as shown. The exit velocity of the water from the nozzle 13 is about 0.04m sec⁻¹ (at 10m per hr, flotation rate) with the inlet cone having a diameter of 600mm exit diameter providing a gradual reduction of the exit velocity to 0.04m sec ⁻¹. The nozzle 13 is positioned about 700mm below the top water surface.

Micro-bubbles of air come out of solution as the water emanates from the nozzle 15 and form a zone or blanket of micro-bubbles right across the whole surface area of the tank 12. The bubbles form a zone about 1 metre deep below the nozzle 13. The air rises and the water flows downwardly as viewed (as in Figs. 1 to 3), through a filter 33, comprising a layer of anthracite 23a on a layer of sand 23b. The filter in the embodiment is suitably 1m high, the anthracite layer being 400mm thick and the sand layer 600mm thick.

The clean water then passes out of the tank 12 and filter 33 to a clean water holding tank 19. Some of the water from tank 19 is recycled to provide the source of micro-bubbles. The water is passed to a saturator 20, packed with suitable plastic contact media such as Pall rings, where it is contacted with air under pressure from a compressor, the air flow being controlled by a float system.

The air is dissolved, the water becomes supersaturated with air and then the water supersaturated with air is passed back to the tank 12. The recycle water flow rate combined with the saturator pressure determine the amount of air being supplied to the vessel 12. A suitable recycle flow rate is a volumetric throughput of 10% of the process flow. Thus the liquid itself is used to provide a carrier for the air-forming micro-bubbles. Some of the water from tank 19 is also used to provide a backwash facility for the filter bed 33.

Water is pumped by a pump 21 through the filter from the bottom as viewed. The backwash water passes out through a washout weir 22 which has a lip 23 over which the water flows, any displaced filter medium falling back from the lip 23 to the filter bed 13.

Scum is collected on the surface of the liquid in the tank 12 and it is removed periodically by raising the level of the water in the tank 12 by operation of suitable valving, some valves of which are shown at FCV in Fig.5, to raise the liquid level and decant scum over a weir 24 into a channel 25 from which it can be removed, see arrow 'S'. There is a weir with a curved lip, known as a ski-jump weir, which provides a horizontal flow of liquid at its surface across the tank 12. This is achieved in that influent 16 is passed to the ski-jump weir, again by suitable valve operation, to pass influent over the weir so as to push the scum laterally to the channel 25.

The counter-current flotation aspect allows the filter bed 33 to run for extended periods, even during high algal bloom loads, without the need to backwash at greatly increased frequencies. The apparatus 1 can thus operate in a peak-lopping mode and flotation in tank 12 could be discontinued when raw water inlet quality is good, so saving on the cost of continuous operation. The de-scumming operation referred to may be carried out without stopping the flotation and filtration process.

In a practical embodiment, referring to Fig.6, the plots on the graph show results of running apparatus according to Figs. 1 - 3 against a flotation apparatus which does not have counter-current flow. The two apparatus were operated with identical process parameters and on the same process water. It can be seen that apparatus according to the invention (plot 2) (inlet) is much better than the non-inventive one (plot 1) (inlet) and respective outlet (plot 3, invention, plot 4, non invention).

The outlet turbidity, plot 3, is flat i.e. remains completely unchanged, unlike the peaked outlet of plot 4 which has risen to mirror the inlet and takes time to recover to the original output quality. Thus hysteresis has been eliminated in the invention, and this leads to more effective removal, and control.

It will be understood that the term "flocculate" used herein is to be taken to mean a "pre-treatment".

It will be understood that the counter-current flotation/filtration method and apparatus described herein has advantages. Thus by releasing the dissolved air at some depth below the inlet of raw water, a blanket or zone of fine micro-bubbles can be generated through which the entire raw water flow must pass. Thus there is potential for greater particle/particle contact and also particle bubble contact. This provides enhanced flocculation and flotation and removes the need for a one to one ratio of flocculator to floater. Also by releasing air below the flocculated water, a high energy air release zone is separated from a high floc concentration zone, thus removing the potential for floc damage in the process stream. The limitation on size of units, due to lack of air in the sludge, is also negated as the air supply is uniform throughout the cross sectional area of the process vessel, and is continuously supplied. Moreover, by having flo/filtration the flotation system is on only when necessary and this saves on the high operational costs of flotation by turning it off when the raw water quality is good. The method and apparatus reduce the amount of capital investment in plant as that plant is not operating in good raw water quality conditions, and reduces the amount of flocculators required for treatment and removes the need for separate flotation vessels altogether.

In a comparison , over three days under high algal load conditions, with standard dual media filters and the method and apparatus of the invention, the invention used 1.5% of the throughput volume for backwashing and the dual filter media 15%, a major saving in volume of wash water required.

## Claims

1. A method of removing particulate impurities from a liquid, comprising providing a treatment vessel, providing a liquid containing particulate impurities, providing a source of gas, providing a zone of gas bubbles in the liquid, passing substantially all incoming liquid through the bubble zone whereby bubbles adhere to particulate impurities in the liquid and cause flotation thereof, and providing a filter for the liquid, **characterised by** passing the liquid into the vessel above the zone of bubbles in an initial direction away from the filter via a riser having a trumpet or bell end so that the energy of the liquid is dissipated whereby integrity of the zone is maintained, by passing the liquid through the zone of bubbles in counter-current relation, and then passing the liquid to the filter in the vessel, downstream of the zone of bubbles, for filtration of the liquid.

2. A method as defined in Claim 1, **characterised in that** the source of bubbles comprises the liquid supersaturated with the gas.

3. A method as defined in Claim 1 or Claim 2, **characterised by** a step of providing that the floating particles flocculate during rising to the liquid surface.

4. A method according to any preceding claim, **characterised in that** the particulate impurities combine with each other and with sinking particulate material.

5. A method according to any preceding claim, **characterised in that** the gas bubble zone extends substantially over the cross-sectional area of the vessel.

6. A method as defined in Claim 5, **characterised in that** the gas bubble zone is continuously maintained.

7. A method according to any preceding claim, **characterised in that** there is a step of regeneration of the filter means.

8. A method as defined in Claim 7, **characterised in that** the regeneration step is a backwashing step.

9. A method according to any preceding claim, **characterised in that** there is a step of de-scumming the liquid.

10. A method as defined in Claim 9, **characterised in that** there is a step of raising the level of the liquid in the vessel to effect de-scumming.

11. Apparatus (1) for removing particulate materials from a liquid, comprising a treatment vessel (12), an inlet (13) to the vessel for liquid containing impurities to be treated, a filter (33) and a source of bubbles of gas (3) adapted to provide in use a zone of bubbles in the vessel through which zone incoming liquid passes in counter-current relation, **characterised by** the liquid inlet (13) comprising a riser having a trumpet or bell end being disposed to pass the liquid into the vessel (12) in an initial direction away from the filter and above the bubble zone so as not to disrupt the bubble zone, and by the filter being in the vessel (12), downstream in use of the zone of gas bubbles, the arrangement being such that liquid containing impurities passes through the zone of gas bubbles in said counter-current relation and then to the filter means.

12. Apparatus as defined in Claim 11, **characterised in that** the source of bubbles of gas comprises a nozzle means (15) through which is dispensed liquid supersaturated with gas.

13. Apparatus according to Claim 12, the nozzle means being intermediate the inlet for liquid (13) and the filter (33).

14. Apparatus according to any of Claims 11 to 13, the liquid inlet (13) being directed away from the filter.

15. Apparatus according to any of Claims 11 to 14, the gas being air.

16. Apparatus according to Claim 15, **characterised by** means to maintain the zone of air continuously in the vessel.

17. Apparatus according to any of Claims 11 to 16, **characterised by** the filter comprising a bed of anthracite (33a) on sand (33b).

18. Apparatus according to any of Claims 11 to 16, **characterised by** the filter comprising sand.

19. Apparatus according to any of Claims 11 to 18, **characterised by** means to backwash the filter (33).

20. Apparatus according to any of Claims 12 to 19, **characterised by** said nozzle means (15) comprising a ramified means having spaced apart nozzles.

21. Apparatus according to any of Claims 12 to 19, **characterised by** said nozzle means (15) comprising a single nozzle means.

22. Apparatus according to Claim 20 or 21, **characterised by** the nozzle means (15) being adjustable in position.

23. According to any of Claims 11 to 22 **characterised by** a curved side weir plate means (17) at a side of the vessel (12) opposite that from which sludge is removed.

24. Apparatus according to any of Claims 11 to 23, **characterised by** a flocculator means (4, 5, 6) upstream of the treatment vessel (12).

25. Apparatus according to Claim 24, **characterised by** the flocculator means comprising a plurality of flocculation tanks (4, 5, 6) through which the liquid flows in series.

26. Apparatus according to Claim 24 or Claim 25, **characterised by** the flocculator means, and treatment vessel are combined in a single unit.

## Patentansprüche

1. Verfahren zur Entfernung partikulärer Verunreinigungen aus einer Flüssigkeit, bei dem man ein Behandlungsgefäß, partikuläre Verunreinigungen enthaltende Flüssigkeit, eine Gasquelle und eine Gasblasenzone in der Flüssigkeit bereitstellt, im wesentlichen sämtliche einströmende Flüssigkeit durch die Blasenzone führt, wodurch Blasen an partikuläre Verunreinigungen in der Flüssigkeit anhaften, deren Flotation verursacht und ein Filter für die Flüssigkeit bereitstellt, **dadurch gekennzeichnet, daß** man die Flüssigkeit über ein Steigrohr mit einem trompeten- oder glockenförmigen Ende über der Blasenzone in einer von dem Filter weg führenden Anfangsrichtung in das Gefäß einführt, so daß die Energie der Flüssigkeit abgeführt wird, wodurch die Unversehrtheit der Zone aufrechterhalten wird, daß man die Flüssigkeit in Gegenstromrichtung durch die Blasenzone führt und die Flüssigkeit dann zu ihrer Filtration zum Filter im Gefäß stromabwärts der Blasenzone führt.

2. Verfahren nach Anspruch 1, **dadurch gekennzeichnet, daß** die Blasenquelle die mit dem Gas übersättigte Flüssigkeit umfaßt.

3. Verfahren nach Anspruch 1 oder 2, **dadurch gekennzeichnet, daß** man dafür sorgt, daß die Schwebeteilchen beim Aufsteigen an die Flüssigkeitsoberfläche ausflocken.

4. Verfahren nach einem der vorhergehenden Ansprüche, **dadurch gekennzeichnet, daß** sich die partikulären Verunreinigungen miteinander und mit sinkenden partikulären Stoffen verbinden.

5. Verfahren nach einem der vorhergehenden Ansprüche, **dadurch gekennzeichnet, daß** sich die Gasblasenzone im wesentlichen über die Querschnittsfläche des Gefäßes erstreckt.

6. Verfahren nach Anspruch 5, **dadurch gekennzeichnet, daß** die Gasblasenzone kontinuierlich aufrechterhalten wird.

7. Verfahren nach einem der vorhergehenden Ansprüche, **dadurch gekennzeichnet, daß** man das Filtermittel regeneriert.

8. Verfahren nach Anspruch 7, **dadurch gekennzeichnet, daß** es sich bei der Regenerierung um eine Rückspülung handelt.

9. Verfahren nach einem der vorhergehenden Ansprüche, **dadurch gekennzeichnet, daß** man Schwimmschlamm aus der Flüssigkeit entfernt.

10. Verfahren nach Anspruch 9, **dadurch gekennzeichnet, daß** man den Flüssigkeitspegel im Gefäß zur Bewirkung der Schwimmschlammentfernung ansteigen läßt.

11. Vorrichtung (1) zur Entfernung von partikulären Stoffen aus einer Flüssigkeit, mit einem Behandlungsgefäß (12), einem Einlaß (13) zum Gefäß für Verunreinigungen enthaltende zu behandelnde Flüssigkeit, ein Filter (33) und eine Gasblasenquelle (3), die im Gebrauch zur Bildung einer Blasenzone im Gefäß ausgeführt ist, wobei durch die Zone einströmende Flüssigkeit in Gegenstromrichtung fließt, **dadurch gekennzeichnet, daß** der Flüssigkeitseinlaß (13) ein Steigrohr mit einem trompeten- oder glockenförmigen Ende umfaßt, das zur Führung der Flüssigkeit in das Gefäß (12) in einer vom Filter weg verlaufenden Anfangsrichtung und über der Blasenzone angeordnet ist, so daß die Blasenzone nicht unterbrochen wird, und daß sich das Filter im Gebrauch stromabwärts der Gasblasenzone im Gefäß (12) befindet, wobei die Anordnung derart ist, daß die Verunreinigungen enthaltende Flüssigkeit in Gegenstrombeziehung durch die Gasblasenzone und dann zum Filtermittel geführt wird.

12. Vorrichtung nach Anspruch 11, **dadurch gekennzeichnet, daß** die Gasblasenquelle ein Düsenmittel (15) umfaßt, durch das die mit Gas übersättigte Flüssigkeit ausgegeben wird.

13. Vorrichtung nach Anspruch 12, wobei das Düsenmittel zwischen dem Flüssigkeitseinlaß (13) und dem Filter (33) angeordnet ist.

14. Vorrichtung nach einem der Ansprüche 11 bis 13, wobei der Flüssigkeitseinlaß (13) vom Filter weg gerichtet ist.

15. Vorrichtung nach einem der Ansprüche 11 bis 14, wobei es sich bei dem Gas um Luft handelt.

16. Vorrichtung nach Anspruch 15, **gekennzeichnet durch** ein Mittel zur kontinuierlichen Aufrechterhaltung der Luftzone im Gefäß.

17. Vorrichtung nach einem der Ansprüche 11 bis 16, **dadurch gekennzeichnet, daß** das Filter ein Bett aus Anthrazit (33a) und Sand (33b) enthält.

18. Vorrichtung nach einem der Ansprüche 11 bis 16, **dadurch gekennzeichnet, daß** das Filter Sand enthält.

19. Vorrichtung nach einem der Ansprüche 11 bis 18, **gekennzeichnet durch** ein Mittel zur Rückspülung des Filters (33).

20. Vorrichtung nach einem der Ansprüche 12 bis 19, **dadurch gekennzeichnet, daß** das Düsenmittel (15) ein verzweigtes Mittel mit voneinander beabstandeten Düsen umfaßt.

21. Vorrichtung nach einem der Ansprüche 12 bis 19, **dadurch gekennzeichnet, daß** das Düsenmittel (15) ein einziges Düsenmittel umfaßt.

22. Vorrichtung nach Anspruch 20 oder 21, **dadurch gekennzeichnet, daß** die Position des Düsenmittels (15) einstellbar ist.

23. Vorrichtung nach einem der Ansprüche 11 bis 22, **gekennzeichnet durch** ein eine gekrümmte Seite aufweisendes Überlaufplattenmittel (17) an einer Seite des Gefäßes (12), die der, von der der Schlamm entfernt wird, gegenüberliegt.

24. Vorrichtung nach einem der Ansprüche 11 bis 23, **gekennzeichnet durch** ein dem Behandlungsgefäß (12) vorgeschaltetes Flockungsmittel (4, 5, 6).

25. Vorrichtung nach Anspruch 24, **dadurch gekennzeichnet, daß** das Flockungsmittel mehrere Flockungsbehälter (4, 5, 6) umfaßt, durch die die Flüssigkeit nacheinander strömt.

26. Vorrichtung nach Anspruch 24 oder 25, **dadurch gekennzeichnet, daß** das Flockungsmittel und das Behandlungsgefäß in einer einzigen Einheit kombiniert sind.

## Revendications

1. Procédé d'élimination d'impuretés particulaires d'un liquide, comprenant la fourniture d'une cuve de traitement, la fourniture d'un liquide contenant des impuretés particulaires, la fourniture d'une source de gaz, la fourniture d'une zone de bulles de gaz dans le liquide, le passage d'essentiellement la totalité du liquide d'admission à travers la zone de bulles de façon à ce que les bulles adhèrent aux impuretés particulaires dans le liquide et provoquent leur flottation, et la fourniture d'un filtre pour le liquide, **caractérisé par** le passage du liquide dans la cuve au-dessus de la zone de bulles dans une direction initiale à l'écart du filtre, via une colonne montante dotée d'une extrémité en trompette ou cloche de façon à dissiper l'énergie du liquide et préserver ainsi l'intégrité de la zone, par le passage du liquide à travers la zone de bulles à contre-courant, puis par le passage du liquide jusqu'au filtre dans la cuve, en aval de la zone de bulles, pour la filtration du liquide.

2. Procédé selon la revendication 1, **caractérisé en ce que** la source de bulles comprend le liquide sursaturé de gaz.

3. Procédé selon la revendication 1 ou la revendication 2, **caractérisé par** une étape consistant à faire en sorte que les particules en flottation floculent lors de leur montée à la surface du liquide.

4. Procédé selon l'une quelconque des revendications précédentes, **caractérisé en ce que** les impuretés particulaires se combinent mutuellement ainsi qu'avec la matière particulaire coulant vers le fond.

5. Procédé selon l'une quelconque des revendications précédentes, **caractérisé en ce que** la zone de bulles de gaz se prolonge essentiellement sur toute la section transversale de la cuve.

6. Procédé selon la revendication 5, **caractérisé en ce que** la zone de bulles de gaz est entretenue de façon continue.

7. Procédé selon l'une quelconque des revendications précédentes, **caractérisé par** l'existence d'une étape de régénération du moyen formant filtre.

8. Procédé selon la revendication 7, **caractérisé en ce que** l'étape de régénération est une étape de lavage à contre-courant.

9. Procédé selon l'une quelconque des revendications précédentes, **caractérisé par** l'existence d'une étape de désécumage du liquide.

10. Procédé selon la revendication 9, **caractérisé par** l'existence d'une étape d'élévation du niveau du liquide dans la cuve pour effectuer le désécumage.

11. Dispositif (1) pour éliminer les matières particulaires d'un liquide, comprenant une cuve de traitement (12), une entrée (13) dans la cuve pour le liquide contenant des impuretés à traiter, un filtre (33) et une source de bulles de gaz (3) adaptée pour procurer, en service, une zone de bulles dans la cuve, zone à travers laquelle le liquide d'admission passe à contre-courant, **caractérisé en ce que** l'entrée (13) de liquide comprend une colonne montante dotée d'une extrémité en trompette ou cloche disposée pour faire passer le liquide dans la cuve (12) dans une direction initiale à l'écart du filtre et au-dessus de la zone de bulles de manière à ne pas perturber la zone de bulles, et **en ce que** le filtre est placé dans la cuve (12), en aval, en service, de la zone de bulles de gaz, l'agencement étant tel que le liquide contenant des impuretés passe à travers la zone de bulles de gaz en contre-courant puis au moyen formant filtre.

12. Dispositif selon la revendication 11, **caractérisé en ce que** la source de bulles de gaz comprend un moyen formant buse (15) à travers lequel est délivré du liquide sursaturé en gaz.

13. Dispositif selon la revendication 12, le moyen formant buse étant situé entre l'entrée (13) de liquide et le filtre (33).

14. Dispositif selon l'une quelconque des revendications 11 à 13, l'entrée (13) de liquide étant dirigée à l'écart du filtre.

15. Dispositif selon l'une quelconque des revendications 11 à 14, le gaz étant de l'air.

16. Dispositif selon la revendication 15, **caractérisé par** un moyen permettant d'entretenir de façon continue la zone d'air dans la cuve.

17. Dispositif selon l'une quelconque des revendications 11 à 16, **caractérisé en ce que** le filtre comprend un lit d'anthracite (33a) et de sable (33b).

18. Dispositif selon l'une quelconque des revendications 11 à 16, **caractérisé en ce que** le filtre comprend du sable.

19. Dispositif selon l'une quelconque des revendications 11 à 18, **caractérisé par** un moyen permettant le lavage à contre-courant du filtre (33).

20. Dispositif selon l'une quelconque des revendications 12 à 19, **caractérisé en ce que** ledit moyen formant buse (15) comprend un moyen ramifié doté de buses espacées.

21. Dispositif selon l'une quelconque des revendications 12 à 19, **caractérisé en ce que** ledit moyen formant buse (15) comprend un moyen formant buse unique.

22. Dispositif selon la revendication 20 ou 21, **caractérisé en ce que** la position du moyen formant buse (15) est réglable.

23. Dispositif selon l'une quelconque des revendications 11 à 22, **caractérisé par** un moyen formant plaque de déversoir latérale incurvée (17) d'un côté de la cuve (12) opposé à celui duquel les boues sont extraites.

24. Dispositif selon l'une quelconque des revendications 11 à 23, **caractérisé par** un moyen formant floculateur (4, 5, 6) en amont de la cuve de traitement (12).

25. Dispositif selon la revendication 24, **caractérisé en ce que** le moyen formant floculateur comprend une pluralité de réservoirs de floculation (4, 5, 6) à travers lesquels le liquide s'écoule en série.

26. Dispositif selon la revendication 24 ou la revendication 25, **caractérisé en ce que** le moyen formant floculateur et la cuve de traitement sont combinés en une unité unique.
